# EUROPÄISCHE PATENTANMELDUNG

(11) **EP 4 566 433 A1**
(43) Veröffentlichungstag der Anmeldung: **11.06.2025**
(21) Anmeldenummer: 24217066.0
(22) Anmeldetag: 03.12.2024
(51) Int. Cl.: A01B 63/08, A01B 76/00, A01B 73/00, A01M 7/00, A01B 63/111

(54) **VERFAHREN ZUM BETREIBEN EINES LANDWIRTSCHAFTLICHEN GESPANNS**

(30) Priorität: 05.12.2023 DE 102023133944
(71) Anmelder: Lemken GmbH & Co KG, 46519 Alpen (DE)
(72) Erfinder: Icking, Lukas, 46325 Borken (DE); Haverkamp, Stefan, 48346 Ostbevern (DE); Schoofs, Dominik, 47589 Uedem (DE)

(57) **Zusammenfassung**

Die vorliegende Erfindung betrifft ein Verfahren zum Betreiben eines landwirtschaftlichen Gespanns (1), welches eine landwirtschaftliche Arbeitsmaschine (2) mit zumindest einer durch Aktuatoren betätigten Geräteschnittstelle (3), an welche ein Anbaugerät (4) zur Bearbeitung eines zu bearbeitenden Feldes (6) adaptiert wird, umfasst, wobei die Aktuatoren der Geräteschnittstelle (3) von einer Steuereinheit (5) des Gespanns (1) angesteuert werden, um das Anbaugerät (4) mit Erreichen einer, insbesondere georeferenzierten, Bearbeitungsgrenze (7), welche einen zu bearbeitenden Feldbereich (8) von einem unbearbeitet zu lassenden Bereich (9) trennt, wechselweise zu deaktivieren und zu aktivieren, wobei zumindest eine der Steuereinheit (5) vorgegebene oder vorgebbare Verzugszeit (VZ) verwendet wird, mit welcher das Deaktivieren oder das Aktivieren des Anbaugerätes (4) zeitlich versetzt vor dem Erreichen der Bearbeitungsgrenze (7) angesteuert wird, wobei zur automatischen Anpassung der zumindest einen Verzugszeit (VZ) ein Sollwert für einen Aktivierungspunkt bzw. einen Sollwert für einen Deaktivierungspunkt, welche der Lage der Bearbeitungsgrenze (7) entsprechen, mit einem sensorisch bestimmten Istwert für den Aktivierungspunkt bzw. den Deaktivierungspunkt durch die Steuereinheit (5) verglichen wird, um einen Differenzabstand (Δs) zwischen dem Sollwert und dem Istwert des Aktivierungspunktes bzw. des Deaktivierungspunktes zu bestimmen, aus dem unter Berücksichtigung der Vorfahrtgeschwindigkeit (v) eine Korrekturzeit (Δt) als auf die zumindest eine Verzugszeit (VZ) anzuwendender Korrekturfaktor bestimmt wird.

## Beschreibung

Die vorliegende Erfindung betrifft ein Verfahren zum Betreiben eines landwirtschaftlichen Gespanns gemäß dem Oberbegriff des Anspruches 1. Weiterhin ist ein landwirtschaftliches Gespann gemäß dem Oberbegriff des Anspruches 16 Gegenstand der Erfindung.

Aus der EP 3 420 789 A1 ist ein Verfahren zum Betreiben eines landwirtschaftlichen Gespanns der eingangs genannten Art bekannt. Das Gespann besteht aus einem Traktor mit Hubwerk und einem Pflug. Ein Anforderungssignal zum Starten eines Vorgewende-Steuerungsmodus wird als Reaktion auf eine Kombination aus einer im Steuersystem empfangenen Benutzereingabe und im Steuersystem bereitgestellten Positionsinformationen für eine geografische Position des Traktors und/oder des Pflugs generiert. Basierend auf den Positionsinformationen wird ein Benutzer aufgefordert, den Start des Vorgewende-Steuerungsmodus zu bestätigen. Nach einer solchen Bestätigung durch den Benutzer wird dann das Anforderungssignal zum Starten des Vorgewende-Steuerungsmodus generiert. Alternativ sieht das aus der EP 3 420 789 A1 bekannte Verfahren vor, das Anforderungssignal zum Starten des Vorgewende-Steuerungsmodus positionsabhängig und, bedingt durch die aktuelle Fahrgeschwindigkeit, auch zeitabhängig zu generieren, um das Ausheben bzw. Deaktivieren oder Einsetzen bzw. Aktivieren beim Verlassen des zu bearbeitenden Feldbereichs bzw. beim Einfahren in den zu bearbeitenden Feldbereich derart anzusteuern, dass stets eine vollständige Bearbeitung des zu bearbeitenden Feldbereichs erreicht wird. Für die Ausführung des Aushebevorgangs respektive Deaktivierungsvorgangs bzw. des Einsetzvorgangs respektive Aktivierungsvorgangs sind jeweils Verzugszeiten im Steuersystem hinterlegt. Die hinterlegten Verzugszeiten sind auf das Anbaugerät abgestimmt und werden für die Dauer der Feldbearbeitung durch das Gespann verwendet. Während der Feldbearbeitung auftretende Einflüsse auf die hinterlegten Verzugszeiten führen zu Abweichungen bei der Ausführung des Aushebevorgangs bzw. des Einsetzvorgangs, sodass eine vollständige Bearbeitung des Feldbereichs nicht gewährleistet ist.

Ausgehend vom vorstehend genannten Stand der Technik liegt der Erfindung die Aufgabe zugrunde, ein Verfahren zum Betreiben eines landwirtschaftlichen Gespanns weiterzubilden, welches den automatisierten Betrieb des Gespanns bei der Ausführung des Deaktivierungsvorgangs bzw. des Aktivierungsvorgangs verbessert.

Die vorstehend genannte Aufgabe wird durch ein Verfahren mit den Merkmalen des Anspruches 1 gelöst. Weiterhin wird die Aufgabe durch ein landwirtschaftliches Gespann mit den Merkmalen des nebengeordneten Anspruches 16 gelöst. Vorteilhafte Weiterbildungen sind Gegenstand der Unteransprüche.

Gemäß dem Anspruch 1 wird ein Verfahren zum Betreiben eines landwirtschaftlichen Gespanns vorgeschlagen, welches eine landwirtschaftliche Arbeitsmaschine mit zumindest einer durch wenigstens einen Aktuator betätigten Geräteschnittstelle, an welche ein landwirtschaftliches Anbaugerät mit zumindest einem Bearbeitungswerkzeug zur Bearbeitung eines zu bearbeitenden Feldes adaptiert wird, und/oder mindestens eine an der Arbeitsmaschine und/oder dem Anbaugerät angeordnete, durch wenigstens einen Aktuator betätigte Werkzeugschnittstelle umfasst, wobei der wenigstens eine Aktuator der Geräteschnittstelle und/oder der wenigstens eine Aktuator der Werkzeugschnittstelle von einer Steuereinheit des Gespanns angesteuert wird, um das Anbaugerät und/oder das zumindest eine Bearbeitungswerkzeug mit Erreichen einer, insbesondere georeferenzierten, Bearbeitungsgrenze, welche einen zu bearbeitenden Feldbereich von einem unbearbeitet zu lassenden Bereich trennt, wechselweise zu deaktivieren und zu aktivieren, wobei zumindest eine der Steuereinheit vorgegebene oder vorgebbare Verzugszeit verwendet wird, mit welcher das Deaktivieren oder das Aktivieren des Anbaugerätes und/oder des zumindest einen Bearbeitungswerkzeugs zeitlich versetzt vor dem Erreichen der Bearbeitungsgrenze angesteuert wird.

Die zumindest eine Geräteschnittstelle kann insbesondere ein Kraftheber sein, der frontseitig und/oder heckseitig an der Arbeitsmaschine angeordnet sein kann.

Die mindestens eine Werkzeugschnittstelle kann als eine Vorrichtung ausgeführt sein, an welcher zumindest ein Bearbeitungswerkzeug angeordnet ist.

Das zumindest eine Bearbeitungswerkzeug zur Bearbeitung des zu bearbeitenden Feldes kann als mit dem Boden in Eingriff zu bringendes Bodenbearbeitungswerkzeug und/oder als oberhalb des Bodens geführtes Bearbeitungswerkzeug ausgeführt sein. Das Anbaugerät sowie das zumindest eine Bearbeitungswerkzeug können zur Bodenbearbeitung und/oder Bestandspflege eines Feldes eingerichtet sein.

Der wenigstens eine Aktuator zur Betätigung der Geräteschnittstelle und/oder der Werkzeugschnittstelle können bevorzugt voneinander unabhängig angesteuert und betätigt werden,

Erfindungsgemäß ist vorgesehen, dass zur automatischen Anpassung der zumindest einen Verzugszeit ein Sollwert für einen Aktivierungspunkt bzw. ein Sollwert für einen Deaktivierungspunkt, welche der Lage der Bearbeitungsgrenze entsprechen, mit einem sensorisch bestimmten Istwert für den Aktivierungspunkt bzw. einem sensorisch bestimmten Istwert für den Deaktivierungspunkt durch die Steuereinheit verglichen wird, um einen Differenzabstand zwischen dem Sollwert und dem Istwert des Aktivierungspunktes bzw. einen Differenzabstand zwischen Sollwert und Istwert des Deaktivierungspunktes zu bestimmen, aus dem unter Berücksichtigung der Vorfahrtgeschwindigkeit eine Korrekturzeit als auf die Verzugszeit anzuwendender Korrekturfaktor bestimmt wird.

Das erfindungsgemäße Verfahren verbessert den automatisierten Betrieb des Gespanns bei der Ausführung des Deaktivierungsvorgangs bzw. des Aktivierungsvorgangs des wenigstens einen Aktuators der Geräteschnittstelle und/oder der Werkzeugschnittstelle. Hierbei werden während der Feldbearbeitung auftretende und auf den wenigstens einen Aktuator wirkende äußere Einflüsse, welche die hinterlegten bzw. hinterlegbaren Verzugszeiten in der Weise beeinflussen, dass es zu einer verspäteten Aktivierung oder Deaktivierung kommt, durch die Bestimmung eines Korrekturfaktors berücksichtigt. Hierzu wird die Korrekturzeit mit der vorgegebenen Verzugszeit verrechnet.

Der Sollwert für den Aktivierungspunkt bzw. den Deaktivierungspunkt entspricht dem Schnittpunkt der Fahrspurlinie mit der Bearbeitungsgrenze. Dabei kann es sich bei der Bearbeitungsgrenze um eine Vorgewendelinie oder wenigstens einen auszusparenden Abschnitt innerhalb des zu bearbeitenden Feldes handeln. Die Vorgewendelinie sowie der wenigstens eine von einer Bearbeitung auszusparende Bereich wird im Vorfeld mittels Spurplanung durch ein Spurplanungssystem festgelegt.

Insbesondere können zur räumlichen Bestimmung des Istwertes des Aktivierungspunktes sowie des Deaktivierungspunktes Positionssignale eines Positionsortungssensors durch die Steuereinheit ausgewertet werden.

Bevorzugt kann zur Bestimmung des Istwertes des Aktivierungspunktes sowie des Deaktivierungspunktes zumindest ein Betriebsparameter der anzusteuernden Geräteschnittstelle und/oder der mindestens einen Werkzeugschnittstelle durch die Steuereinheit ausgewertet werden.

Hierzu kann als ein Betriebsparameter der Geräteschnittstelle und/oder der mindestens einen Werkzeugschnittstelle ein Schwellwert für eine Soll-Arbeitsposition der Geräteschnittstelle und/oder der mindestens einen Werkzeugschnittstelle bestimmt werden. In der Soll-Arbeitsposition befindet sich das Anbaugerät nach Beendigung des Aktivierungsvorgangs in einer Position, in welcher zumindest eines oder alle Bearbeitungswerkzeuge des Anbaugerätes ihre bestimmungsgemäße Aufgabe ausführen können. Das Anbaugerät befindet sich nach Beendigung des Deaktivierungsvorgangs in seiner Soll-Arbeitsposition, wenn alle zumindest eines oder alle Bearbeitungswerkzeuge des Anbaugerätes deaktiviert, z.B. vollständig ausgehoben, sind.

Gemäß einer Weiterbildung kann der Schwellwert für die Soll-Arbeitsposition durch einen Bediener des Gespanns manuell vorgegeben oder durch einen von der Steuereinheit initiierten Lernprozess bestimmt werden.

Bevorzugt kann zur Bestimmung des Istwertes des Aktivierungspunktes sowie des Deaktivierungspunktes zumindest ein Betriebsparameter des Anbaugerätes durch die Steuereinheit ausgewertet werden.

Dabei kann als ein Betriebsparameter des Anbaugerätes ein Wert für die Arbeitstiefe des Anbaugerätes durch eine am Anbaugerät angeordnete Sensorik erfasst und mit einem vorgegebenen Schwellwert für die Arbeitstiefe verglichen werden.

Weiterhin kann als ein Betriebsparameter des Anbaugerätes ein Wert für die Bearbeitungsbreite durch die Bearbeitungswerkzeuge durch eine am Anbaugerät angeordnete Sensorik erfasst und mit einem vorgegebenen Schwellwert für die Bearbeitungsbreite verglichen werden.

Insbesondere kann der Ansteuerung des wenigstens einen Aktuators der Geräteschnittstelle und/oder der Werkzeugschnittstelle sowie mit der Detektion des Istwertes des Aktivierungspunktes sowie des Istwertes des Deaktivierungspunktes die Aufzeichnung der von dem Positionsortungssensor bereitgestellten Positionssignale initiiert werden. Die Ansteuerung des wenigstens einen Aktuators der Geräteschnittstelle und/oder der mindestens einen Werkzeugschnittstelle kann durch die Steuereinheit selbst oder durch eine zusätzliche Steuerungsvorrichtung der Arbeitsmaschine erfolgen, welche ein korrespondierendes Steuersignal an die Steuereinheit übermittelt.

Weiterhin können für das Deaktivieren oder das Aktivieren unterschiedliche Verzugszeiten verwendet werden.

Bevorzugt kann die Bestimmung der Korrekturzeit zyklisch durchgeführt werden. Hierdurch kann auf äußere Einflüsse und/oder Änderungen von Betriebsbedingungen, die eine Verlängerung der Dauer des Aktivierungsvorgangs oder des Deaktivierungsvorgangs über die vorgegebene Verzugszeit hinaus zur Folge haben, reagiert werden.

Insbesondere kann die Bestimmung der Korrekturzeit nach jedem Aktivierungs- und Deaktivierungsvorgang durchgeführt werden.

Des Weiteren kann die Vorgabe der Verzugszeit in Abhängigkeit von der Art des Anbaugerätes durchgeführt werden.

Bevorzugt kann für die Vorgabe der Verzugszeit eine Kalibrierfahrt durchgeführt werden. Hierzu kann zumindest eine Fahrspur vollständig abgefahren werden, um jeweils zumindest einen Einsetzvorgang und einen Aushebevorgang durchzuführen.

Gemäß einer bevorzugten Weiterbildung kann die Korrekturzeit als Mittelwert von Verzugszeiten mehrerer Deaktivierungen und Aktivierungen des Anbaugerätes und/oder des zumindest einen Bearbeitungswerkzeugs bestimmt werden. Wie bereits weiter oben angedeutet, können für die Durchführung des Aktivierungs- und Deaktivierungsvorgangs jeweils unterschiedliche Verzugszeiten vorgesehen sein. Entsprechend können unterschiedliche Mittelwerte für die Verzugszeiten mehrerer Deaktivierungsvorgänge und Aktivierungsvorgänge bestimmt werden.

Weiterhin wird die eingangs genannte Aufgabe durch ein landwirtschaftliches Gespann mit den Merkmalen des nebengeordneten Anspruches 16 gelöst.

Gemäß dem Anspruch 16 wird ein landwirtschaftliches Gespann, umfassend eine landwirtschaftliche Arbeitsmaschine mit zumindest einer durch wenigstens einen Aktuator betätigten Geräteschnittstelle, an welche ein landwirtschaftliches Anbaugerät mit zumindest einem Bearbeitungswerkzeug zur Bearbeitung eines zu bearbeitenden Feldes adaptiert ist, und/oder mindestens eine an der Arbeitsmaschine und/oder dem Anbaugerät angeordnete, durch wenigstens einen Aktuator betätigte Werkzeugschnittstelle, wobei das Gespann eine Steuereinheit aufweist, die zur Ansteuerung des wenigstens einen Aktuators der Geräteschnittstelle und/oder des wenigstens einen Aktuators der Werkzeugschnittstelle ausgeführt und eingerichtet ist, um das Anbaugerät und/oder das zumindest eine Bearbeitungswerkzeug mit Erreichen einer, insbesondere georeferenzierten, Bearbeitungsgrenze, welche einen zu bearbeitenden Feldbereich von einem unbearbeitet zu lassenden Bereich des Feldes trennt, wechselweise zu deaktivieren und zu aktivieren, wobei die Steuereinheit zumindest eine vorgegebene oder vorgebbare Verzugszeit verwendet, mit welcher die Steuereinheit das Deaktivieren oder das Aktivieren des Anbaugerätes und/oder des zumindest einen Bearbeitungswerkzeugs zeitlich versetzt vor dem Erreichen der Bearbeitungsgrenze ansteuert. Erfindungsgemäß ist vorgesehen, dass die Steuereinheit dazu ausgeführt und eingerichtet ist, zur automatischen Anpassung der zumindest einen Verzugszeit einen Sollwert für einen Aktivierungspunkt bzw. einen Sollwert für einen Deaktivierungspunkt, welcher der Bearbeitungsgrenze entspricht, mit einem sensorisch bestimmten Istwert für den Aktivierungspunkt bzw. den Deaktivierungspunkt zu vergleichen, um einen Differenzabstand zwischen dem Sollwert und dem Istwert des Aktivierungspunktes bzw. des Deaktivierungspunktes zu bestimmen, und aus dem Differenzabstand unter Berücksichtigung der Vorfahrtgeschwindigkeit eine Korrekturzeit als auf die Verzugszeit anzuwendender Korrekturfaktor zu bestimmen.

Insbesondere ist das landwirtschaftliche Gespann zur Durchführung des Verfahrens nach einem der Ansprüche 1 bis 15 ausgeführt und eingerichtet.

Auf die Vorteile des erfindungsgemäßen Verfahrens darf verweisen werden.

Die vorliegende Erfindung wird nachstehend anhand eines in den Zeichnungen dargestellten Ausführungsbeispieles näher erläutert.

Es zeigen:
- Fig. 1: schematisch und exemplarisch ein landwirtschaftliches Gespann beim Einsetzvorgang;
- Fig. 2: schematisch und exemplarisch das landwirtschaftliche Gespann beim Aushebevorgang;
- Fig. 3: schematisch einen Ablauf des erfindungsgemäßen Verfahrens zum Betreiben des landwirtschaftlichen Gespanns; und
- Fig. 4: schematisch und exemplarisch eine weitere Ausführungsform des landwirtschaftlichen Gespanns.

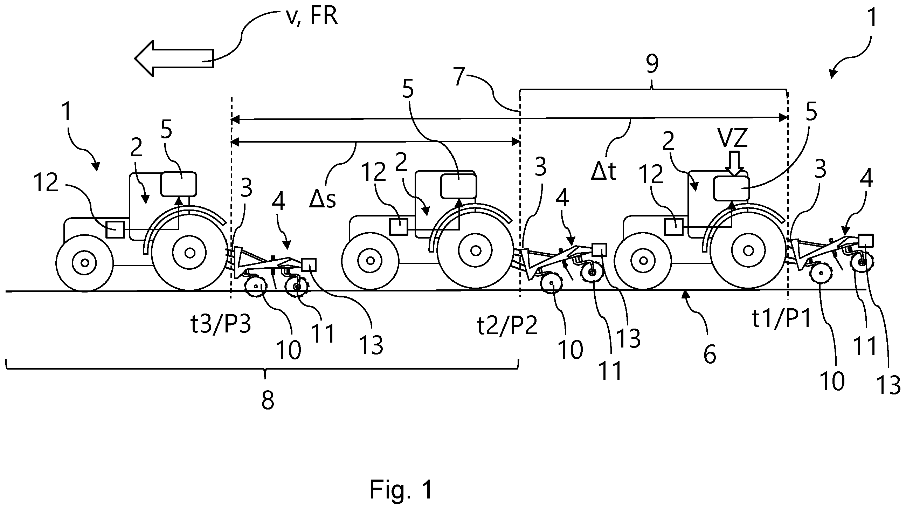

In Fig. 1 ist schematisch und exemplarisch ein landwirtschaftliches Gespann 1 bei einem Aktivierungsvorgang, hier dem Einsetzen, dargestellt. Das landwirtschaftliche Gespann 1 umfasst eine landwirtschaftliche Arbeitsmaschine 2 mit zumindest einer durch Aktuatoren betätigten Geräteschnittstelle 3, an welche ein Anbaugerät 4 zur Bearbeitung, hier beispielhaft zur Bodenbearbeitung, eines zu bearbeitenden Feldes 6 adaptiert wird. Das Anbaugerät 4 weist in Reihen angeordnete als Bodenbearbeitungswerkzeuge ausgeführte Bearbeitungswerkzeuge 10, 11 auf. Lediglich beispielhaft ist die Arbeitsmaschine 2 als Traktor und das Anbaugerät 4 als Scheibenegge ausgeführt. Die Bearbeitungswerkzeuge 10 einer ersten Reihe und die in einer weiteren Reihe der ersten Reihe nachgeordneten Bearbeitungswerkzeuge 11 sind als Hohlscheiben ausgeführt. Das Anbaugerät 4 kann unter anderem als Pflug, Grubber, Hacke, Spritze oder dergleichen ausgeführt sein. Die Arbeitsmaschine 2 kann auch als autonom agierendes Fahrzeug 14 ausgeführt sein, an welches das Anbaugerät 3 adaptiert ist.

Die Aktuatoren der Geräteschnittstelle 3 werden von einer Steuereinheit 5 des Gespanns 1 angesteuert, um das Anbaugerät 4 mit Erreichen einer, insbesondere georeferenzierten, Bearbeitungsgrenze 7, welche einen zu bearbeitenden Feldbereich 8 von einem unbearbeitet zu lassenden Bereich 9, beispielsweise einem Vorgewendebereich, einem Gewässer oder einem sonstigen im Feldbereich 8 befindlichen von einer Bearbeitung auszusparenden Abschnitt, trennt, wechselweise zu deaktivieren, hier auszuheben, und zu aktivieren, hier einzusetzen. Die Bearbeitungsgrenze 7 respektive Vorgewendelinie oder der wenigstens eine auszusparende Abschnitt im Feldbereich 8 wird im Vorfeld bei der mittels eines Spurplanungssystems durchgeführten Spurplanung festgelegt. Die Aktuatoren der zumindest einen Geräteschnittstelle 3 sind hier und vorzugsweise als Hydraulikzylinder ausgeführt. Bei der zumindest einen Geräteschnittstelle 3 handelt es sich insbesondere um einen Dreipunkt-Kraftheber.

Zur Durchführung eines Aktivierungsvorgangs bzw. eines Deaktivierungsvorgangs wird zumindest eine der Steuereinheit 5 vorgegebene oder vorgebbare Verzugszeit VZ verwendet, mit welcher das Deaktivieren, hier das Ausheben, oder das Aktivieren, hier das Einsetzen, des Anbaugerätes 4 zeitlich versetzt vor dem Erreichen der Bearbeitungsgrenze 7 angesteuert wird. Das Vorgeben der Verzugszeit VZ ermöglicht eine Automatisierung des Ablaufs der Deaktivierung und/oder der Aktivierung des Anbaugerätes 4.

Nachfolgend werden die Begriffe Ausheben und Einsetzen synonym für Deaktivierung und Aktivierung verwendet. Die Begriffe Aushebepunkt und Einsetzpunkt werden synonym für Deaktivierungspunkt und Aktivierungspunkt verwendet.

Das Gespann 1 wird mit einer Vorfahrtgeschwindigkeit v in Fahrtrichtung FR bewegt. Der Steuereinheit 5 werden Signale, beispielsweise von Drehzahlsensoren, zugeführt, mittels der die Steuereinheit 5 die aktuelle Vorfahrtgeschwindigkeit v bestimmen kann. Dem Gespann 1, vorzugsweise der Arbeitsmaschine 2, ist zumindest ein Positionsortungssensor 12 zugeordnet, welcher kontinuierlich Positionssignale an die Steuereinheit 5 übermittelt. Die räumliche Position der Anordnung des zumindest einen Positionsortungssensors 12 an dem Gespann 1 ist bekannt, um den Aushebepunkt und Einsetzpunkt des Anbaugerätes 4 relativ zur Bearbeitungsgrenze 7 bestimmen zu können.

Im Zeitpunkt t1 wird von der Steuereinheit 5 in Abhängigkeit von der Verzugszeit VZ ein Steuersignal zum Einsetzen des Anbaugerätes 4 an die zumindest eine Geräteschnittstelle 3 übermittelt, um den Vorgang des Einsetzens zeitlich versetzt vor dem Erreichen der Feldbearbeitungsgrenze 7 einzuleiten. Mit P1 ist die Position des Anbaugerätes 4 im Zeitpunkt t1 bezeichnet.

Im Zeitpunkt t2 wird vom Anbaugerät 4 die Feldbearbeitungsgrenze 7 erreicht, was einer Position P2 entspricht. Zu diesem Zeitpunkt t2 soll sich das Anbaugerät 4 in einer Soll-Arbeitsposition befinden. Die Position P2 entspricht einem Sollwert für einen Einsetzpunkt des Anbaugerätes 4, welcher unter Berücksichtigung der vorgegebenen oder vorgebbaren Verzugszeit VZ erreicht werden soll. In der Soll-Arbeitsposition sollen die Bearbeitungswerkzeuge 10, 11 beider Reihen mit dem Boden des zu bearbeitenden Feldbereichs 8 in Eingriff stehen.

Wie aus der Darstellung des Gespanns 1 in Fig. 1 im Zeitpunkt t2 ersichtlich, befindet sich nur die vordere Reihe mit Bearbeitungswerkzeugen 10 mit dem Boden in Eingriff. Die hintere Reihe mit Bearbeitungswerkzeugen 11 ist im Zeitpunkt t2 noch zum Boden beabstandet.

Im Zeitpunkt t3 wird eine Position P3 des Gespanns 1 erreicht. In der Position P3, in welcher das Anbaugerät 4 die angestrebte Soll-Arbeitsposition erreicht hat, stehen beide Reihen mit Bearbeitungswerkzeugen 10, 11 mit dem Boden des zu bearbeitenden Feldbereichs 8 in Eingriff. Die Position P3 entspricht einem Istwert für den Einsetzpunkt respektive Aktivierungspunkt des Anbaugerätes 4, welcher aufgrund der verwendeten Verzugszeit VZ, erreicht wird.

Mittels des zumindest einen Positionsortungssensors 12, welcher dem Gespann 1, vorzugsweise der Arbeitsmaschine 2, zugeordnet ist, werden die Positionen P1, P2 und P3 im jeweiligen Zeitpunkt t1, t2 und t3 bestimmt und in der Steuereinheit 5 hinterlegt. Die Steuereinheit 5 bestimmt einen Differenzabstand Δs zwischen den Positionen P3 und P2, d.h. dem Istwert für den tatsächlichen Einsetzpunkt und dem Sollwert für den angestrebten Einsetzpunkt, der im Wesentlichen mit der Bearbeitungsgrenze 7 korrespondieren soll.

Während der Feldbearbeitung auftretende Einflüsse auf die vorgegebenen oder vorgebbaren Verzugszeiten VZ führen zu Abweichungen bei der Ausführung des Aushebevorgangs bzw. des Einsetzvorgangs, sodass eine vollständige Bearbeitung des zu bearbeitenden Feldbereichs 8 nicht gewährleistet ist oder eine ungewollte partielle Bearbeitung über die Bearbeitungsgrenze 7 hinaus erfolgt.

Für eine automatische Anpassung der zumindest einen Verzugszeit VZ wird ein Sollwert für den Einsetzpunkt, welcher der Bearbeitungsgrenze 7 entspricht, mit dem sensorisch bestimmten Istwert für den Einsetzpunkt durch die Steuereinheit 5 verglichen, um den Differenzabstand Δs zwischen dem Sollwert und dem Istwert des Einsetzpunktes zu bestimmen. Aus dem Differenzabstand Δs wird unter Berücksichtigung der Vorfahrtgeschwindigkeit v eine Korrekturzeit Δt als auf die Verzugszeit VZ anzuwendender Korrekturfaktor bestimmt.

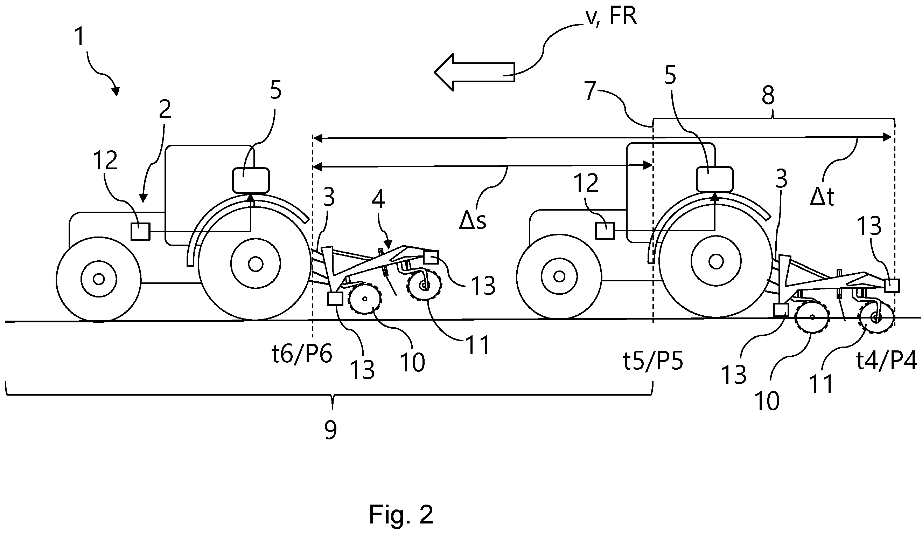

Die Darstellung in Fig. 2 zeigt schematisch und exemplarisch das landwirtschaftliche Gespann 1 beim Aushebevorgang. Das Gespann 1 bewegt sich vom zu bearbeitenden Feldbereich 8 kommend auf die Bearbeitungsgrenze 7 zu. Im Zeitpunkt t4 wird von der Steuereinheit 5 in Abhängigkeit von der vorgegebenen Verzugszeit VZ ein Steuersignal zum Ausheben des Anbaugerätes 4 an die zumindest eine Geräteschnittstelle 3 übermittelt, um den Vorgang des Aushebens zeitlich versetzt vor dem Erreichen der Bearbeitungsgrenze 7 einzuleiten. Mit P4 ist die Position des Anbaugerätes 4 im Zeitpunkt t4 bezeichnet.

Im Zeitpunkt t5 wird vom Anbaugerät 4 die Bearbeitungsgrenze 7 erreicht, was einer Position P5 entspricht. Zu diesem Zeitpunkt t5 soll sich das Anbaugerät 4 entsprechend der Ansteuerung der Aktuatorik der Geräteschnittstelle 3 in ausgehobener Position befinden. Die Position P5 entspricht einem Sollwert für einen Aushebepunkt des Anbaugerätes 4, welcher unter Berücksichtigung der vorgegebenen oder vorgebbaren Verzugszeit VZ erreicht werden soll. In der Soll-Arbeitsposition sollen die Bearbeitungswerkzeuge 10, 11 beider Reihen mit dem Boden des zu bearbeitenden Feldbereichs 8 außer Eingriff stehen.

Im Zeitpunkt t6 wird eine Position P6 erreicht. In der Position P6, in welcher das Anbaugerät 4 die angestrebte Soll-Arbeitsposition des Anbaugerätes 4 erreicht hat, sind beide Reihen mit Bearbeitungswerkzeugen 10, 11 vollständig ausgehoben, so dass diese nicht mehr mit dem Boden des zu bearbeitenden Feldbereichs 8 in Eingriff stehen. Die Position P6 entspricht einem Istwert für den Aushebepunkt des Anbaugerätes 4, welcher aufgrund der verwendeten Verzugszeit VZ, erreicht wird.

Mittels des zumindest einen Positionsortungssensors 12 werden die Positionen P4, P5 und P6 im jeweiligen Zeitpunkt t4, t5 und t6 bestimmt. Die Steuereinheit 5 bestimmt einen Differenzabstand Δs zwischen den Positionen P6 und P5, d.h. dem Istwert für den tatsächlichen Aushebepunkt und dem Sollwert für den angestrebten Aushebepunkt, der im Wesentlichen mit der Bearbeitungsgrenze 7 korrespondieren soll.

Für eine automatische Anpassung der zumindest einen Verzugszeit VZ wird ein Sollwert für den Aushebepunkt, welcher der Bearbeitungsgrenze 7 entspricht, mit dem sensorisch bestimmten Istwert für den Aushebepunkt durch die Steuereinheit 5 verglichen, um den Differenzabstand Δs zwischen dem Sollwert und dem Istwert des Aushebepunktes zu bestimmen. Aus dem Differenzabstand Δs wird unter Berücksichtigung der Vorfahrtgeschwindigkeit v eine Korrekturzeit Δt als auf die Verzugszeit VZ anzuwendender Korrekturfaktor bestimmt.

Zur Bestimmung des Istwertes des Einsetzpunktes sowie des Aushebepunktes wird zumindest ein Betriebsparameter der Geräteschnittstelle 3 durch die Steuereinheit 5 ausgewertet. Als ein Betriebsparameter der Geräteschnittstelle 3 kann ein Schwellwert für die Soll-Arbeitsposition der Geräteschnittstelle 3 bestimmt werden. Die jeweilige Arbeitsposition der Geräteschnittstelle 3 wird in der Regel als prozentualer Wert bestimmt und kann auf einer der Arbeitsmaschine 2 zugeordneten Benutzerschnittstelle ausgegeben werden.

Um den Schwellwert für die Soll-Arbeitsposition der Geräteschnittstelle 3 zu bestimmen, kann der Schwellwert durch einen Bediener des Gespanns 1 manuell vorgegeben werden. Alternativ kann der Schwellwert für die Soll-Arbeitsposition der Geräteschnittstelle 3 durch einen von der Steuereinheit 5 initiierten Lernprozess bestimmt werden.

Die automatische Bestimmung der Soll-Arbeitsposition kann beispielsweise mittels der Spurplanung durchgeführt werden. Die Steuereinheit 5 hat aufgrund der im Vorfeld erfolgten Spurplanung Kenntnis von der Lage abzufahrender Arbeitsspuren. Beim Abfahren der Arbeitsspuren kann die Steuereinheit 5 automatisch einen Mittelwert für die Soll-Arbeitsposition der Geräteschnittstelle 3 bestimmen und als Schwellwert verwenden. Alternativ oder zusätzlich kann zur Bestimmung des Istwertes des Einsetzpunktes sowie des Istwertes des Aushebepunktes zumindest ein Betriebsparameter des Anbaugerätes 4 durch die Steuereinheit 5 ausgewertet werden. Bevorzugt kann ein Arbeitstiefenwert des Anbaugerätes 4 bestimmt werden. Hierzu kann am Anbaugerät 4 zumindest eine Sensorik 13 vorgesehen sein, welche zur Bestimmung der Arbeitstiefe des Anbaugerätes 4 ausgeführt und eingerichtet ist. Durch die Steuereinheit 5 kann die detektierte Arbeitstiefe mit einem vorgegebenen Schwellwert für die Arbeitstiefe verglichen werden, um den Istwert des Einsetzpunktes sowie den Istwert des Aushebepunktes zu bestimmen.

Die Steuereinheit 5 ist dazu eingerichtet, dass mit der Ansteuerung der Aktuatoren der Geräteschnittstelle 3 sowie der Detektion des Istwertes des Einsetzpunktes sowie des Aushebepunktes die Aufzeichnung der von dem Positionsortungssensor 12 bereitgestellten Positionssignale initiiert wird. Hierdurch wird automatisch die Position P1 und P3 während des Einsetzvorgangs bzw. P4 und P6 des Aushebevorgangs bestimmt und aufgezeichnet.

Für eine automatische Anpassung der zumindest einen Verzugszeit VZ wird der Sollwert für den Aushebepunkt, welcher der Bearbeitungsgrenze 7 entspricht, mit dem sensorisch bestimmten Istwert für den Aushebepunkt durch die Steuereinheit 5 verglichen, um den Differenzabstand Δs zwischen dem Sollwert und dem Istwert des Aushebepunktes zu bestimmen. Aus dem Differenzabstand Δs wird unter Berücksichtigung der Vorfahrtgeschwindigkeit v eine Korrekturzeit Δt als der auf die für den Aushebevorgang verwendete Verzugszeit VZ anzuwendende Korrekturfaktor bestimmt.

Die verwendeten Verzugszeiten VZ können für den Einsetzvorgang und den Ausgebevorgang identisch sein oder voneinander abweichen. Entsprechend erfolgt die Anpassung mittels der bestimmten Korrekturzeit Δt als Korrekturfaktor auf die jeweils für den Einsetzvorgang und den Aushebevorgang verwendete Verzugszeit VZ.

Die Bestimmung der Korrekturzeit Δt wird zyklisch durchgeführt, um erforderlichenfalls eine Anpassung der Verzugszeit VZ vornehmen zu können. Vorzugsweise kann die Bestimmung der Korrekturzeit Δt nach jedem Aktivierungs- und Deaktivierungsvorgang durchgeführt werden. Der Vorteil besteht darin, dass Änderungen bestehender Betriebsbedingungen oder Einflüsse während des Bearbeitungsvorgangs des Feldes 6 automatisch und fortlaufend berücksichtigt werden können. Hierzu zählen beispielsweise Änderungen der Viskosität des Hydrauliköls der hydraulischen Aktuatoren der Geräteschnittstelle 3 aufgrund von Erwärmung oder eine Änderung des Eigengewichts des Anbaugerätes 4 wie im Fall einer Sävorrichtung mit Saatguttank als Anbaugerät 4.

Weitere Einflussgrößen, die eine Anpassung der Verzugszeit VZ erforderlich machen können, können das Gewicht des Anbaugeräts 4 oder das Auftreten von Reibung an bewegten Bauteilen des Gespanns 1 sein. Weiterhin bilden der Betriebsparameter der eingestellten Höhe der als Hubwerk ausgeführten Geräteschnittstelle 3 und das Anbaugerätegewicht eine Einflussgröße, da der Hebelarm zum Drehpunkt des 3-Punkt-Gestänges am Hubwerk sich mit der Hubhöhe verändert. Weitere Betriebsparameter des Gespanns 1, welche die Verzugszeiten VZ beeinflussen sind der Hydraulikdruck im Hydrauliksystem des Gespanns 1 oder eine Auflagedruckeinstellung, die der mechanischen Druckentlastung des Anbaugerätes 4 dienen kann. Die Beschaffenheit des Bodens im Feldbereich 8 hat bei einem Gespann 1 mit einem Anbaugerät 4 zur Bodenbearbeitung während des Einsetzvorgangs respektive des Aktivierungsvorgangs einen großen Einfluss auf das Einsetzverhalten. Die Bodenbeschaffenheit kann die Vorfahrtgeschwindigkeit ebenso beeinflussen wie die von der Arbeitsmaschine 2 bereitzustellende Leistung, um die Soll-Arbeitsposition am Ende des Einsetzvorgangs zu erreichen.

Die Vorgabe der Verzugszeit VZ wird in Abhängigkeit von der Art des Anbaugerätes 4 durchgeführt. So sind die Verzugszeiten VZ beispielsweise für Anbaugeräte 4 vom Typ Sämaschine, Egge, Grubber, Hacke, Spritze oder Pflug unterschiedlich. Zusätzlich variiert die Verzugszeit unter anderem in Abhängigkeit von der Arbeitsbreite des Anbaugerätes 4 und/oder der Bodenbeschaffenheit des zu bearbeitenden Feldbereichs 8.

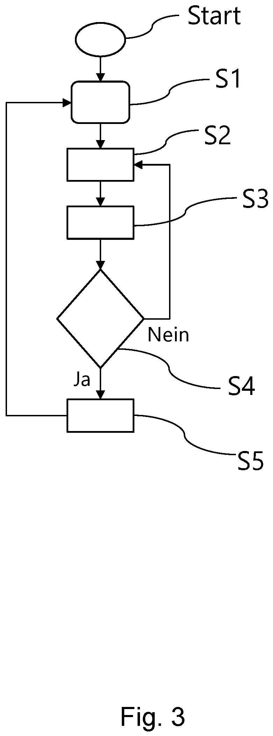

Nachfolgend wird mittels der Darstellung in Fig. 3 schematisch der Ablauf des erfindungsgemäßen Verfahrens zum Betreiben des landwirtschaftlichen Gespanns 1 anhand des in Fig. 1 dargestellten Einsetzvorgangs erläutert.

Nach dem Starten des Programms wird in einem ersten Schritt S1 eine für das Anbaugerät 4 gerätespezifische Verzugszeit VZ als Startwert für den Bearbeitungsvorgang vorgegeben.

Im zweiten Schritt S2 wird das Vorliegen eines Steuersignals zum Einsetzen des Anbaugerätes 4 detektiert. Damit verbunden werden der Zeitpunkt t1, die Position P1 sowie die Vorfahrtgeschwindigkeit v erfasst und aufgezeichnet.

Im dritten Schritt S3 wird das Erreichen der Soll-Arbeitsposition des Anbaugerätes 4 bestimmt. Damit verbunden werden der Zeitpunkt t3, die Position P3 sowie die Vorfahrtgeschwindigkeit v erfasst und aufgezeichnet.

Im vierten Schritt S4 wird überprüft, ob es zwischen der angestrebten Position P2, die dem Sollwert für den Einsetzpunkt des Anbaugerätes 4 entspricht, welcher unter Berücksichtigung der vorgegebenen Verzugszeit VZ erreicht werden soll, und der Position P3 eine Abweichung gibt. Hierzu wird der Differenzabstand Δs bestimmt.

Liegt ein Differenzabstand Δs vor, wird im fünften Schritt S5 aus dem Differenzabstand Δs unter Berücksichtigung der Vorfahrtgeschwindigkeit v die Korrekturzeit Δt als auf die vorgegebene Verzugszeit VZ anzuwendender Korrekturfaktor bestimmt. Der Korrekturfaktor wird auf die vorgegebene Verzugszeit VZ angewendet und es wird zum ersten Schritt S1 zurückgesprungen, um mit der angepassten Verzugszeit VZ das Procedere bis zur Durchführung des nächsten Einsetzvorgangs fortzuführen.

Liegt im fünften Schritt kein Differenzabstand Δs vor, wird unmittelbar zum zweiten Schritt S2 zurückgesprungen.

Für die Bewertung des Vorliegens eines Differenzabstand Δs kann vorgesehen sein, dass für Differenzabstand Δs ein Grenzwert herangezogen wird, dessen Passieren die Bestimmung Korrekturzeit Δt im fünften Schritt S5 und dessen Anwendung auf die im ersten Schritt S1 vorgegebene Verzugszeit VZ auslöst.

Die Verfahrensschritte S1 bis S5 sind in analoger Weise auf den Ablauf des erfindungsgemäßen Verfahrens zum Betreiben des landwirtschaftlichen Gespanns 1 anhand des in Fig. 2 dargestellten Aushebevorgangs übertragbar.

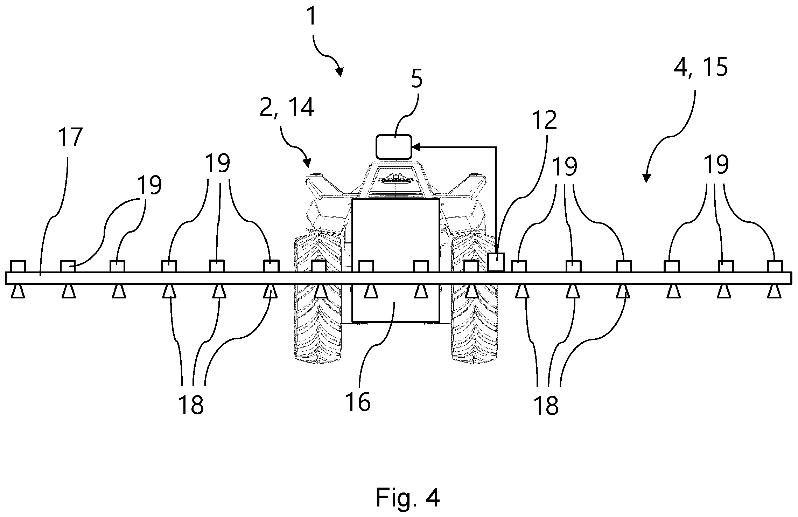

In Fig. 4 ist schematisch und exemplarisch eine weitere Ausführungsform des Gespanns 1 dargestellt, wobei die Arbeitsmaschine 2 als autonomes Fahrzeug 14 ausgeführt ist. Das Fahrzeug weist die Geräteschnittstelle 3 auf, an welche ein als Spritze 15 ausgeführtes Anbaugerät 4 adaptiert ist. Die Spritze 15 umfasst einen Flüssigkeitsbehälter 16 sowie ein Gestänge 17, an dem eine Vielzahl von Spritzdüsen 18 angeordnet sind. Jede Spritzdüse 18 ist an einer Werkzeugschnittstelle 19 angeordnet, die jeweils durch wenigstens einen Aktuator betätigt wird. Der Aktuator zur Betätigung der Werkzeugschnittstelle 19 kann eine Ventilvorrichtung sein. Der Aktuator kann ein zusätzlicher Verstellmechanismus sein, der eine Veränderung des Schwenkwinkels der jeweiligen Spritzdüse 18 ermöglicht.

Die Steuereinheit 5 ist zur Ansteuerung der Werkzeugschnittstellen 19 eingerichtet, um beispielsweise vor dem Erreichen einer Bearbeitungsgrenze 7, wie einem Gewässer, beispielsweise eine Teilbreitenabschaltung oder eine Randdüsenabschaltung im Sinne der Deaktivierung vorzunehmen. Die hierfür erforderliche Verzugszeit VZ sowie deren Anpassung durch die Bestimmung der Korrekturzeit (Δt) erfolgen wie weiter oben anhand des in Fig. 3 dargestellten Ablaufdiagramms bereits erläutert. Die bestimmte Korrekturzeit (Δt) ist dabei der auf die zumindest eine Verzugszeit (VZ) anzuwendende Korrekturfaktor. Dies gilt entsprechend für den Aktivierungsvorgang.

**Bezugszeichenliste**

| | | | |
|---|---|---|---|
| 1 | Gespann | P4 | Position |
| 2 | Arbeitsmaschine | P5 | Position |
| 3 | Geräteschnittstelle | P6 | Position |
| 4 | Anbaugerät | v | Vorfahrtgeschwindigkeit |
| 5 | Steuereinheit | VZ | Verzugszeit |
| 6 | Feld | S1 | Schritt |
| 7 | Feldbearbeitungsgrenze | S2 | Schritt |
| 8 | Feldbereich | S3 | Schritt |
| 9 | Vorgewendebereich | S4 | Schritt |
| 10 | Bodenbearbeitungswerkzeug | S5 | Schritt |
| 11 | Bodenbearbeitungswerkzeug | | |
| 12 | Positionsortungssensor | Δs | Differenzabstand |
| 13 | Sensorik | Δt | Korrekturzeit |
| 14 | Autonomes Fahrzeug | | |
| 15 | Spritze | | |
| 16 | Flüssigkeitsbehälter | | |
| 17 | Gestänge | | |
| 18 | Spritzdüse | | |
| 19 | Werkzeugschnittstelle | | |
| FR | Fahrtrichtung | | |
| t1 | Zeitpunkt | | |
| t2 | Zeitpunkt | | |
| t3 | Zeitpunkt | | |
| t4 | Zeitpunkt | | |
| t5 | Zeitpunkt | | |
| t6 | Zeitpunkt | | |
| P1 | Position | | |
| P2 | Position | | |
| P3 | Position | | |

## Patentansprüche

1. Verfahren zum Betreiben eines landwirtschaftlichen Gespanns (1), welches eine landwirtschaftliche Arbeitsmaschine (2) mit zumindest einer durch wenigstens einen Aktuator betätigten Geräteschnittstelle (3), an welche ein landwirtschaftliches Anbaugerät (4) mit zumindest einem Bearbeitungswerkzeug (10, 11, 18) zur Bearbeitung eines zu bearbeitenden Feldes (6) adaptiert wird, und/oder mindestens eine an der Arbeitsmaschine (2) und/oder dem Anbaugerät (4) angeordnete, durch wenigstens einen Aktuator betätigte Werkzeugschnittstelle (19) umfasst, wobei der wenigstens eine Aktuator der Geräteschnittstelle (3) und/oder der wenigstens eine Aktuator der Werkzeugschnittstelle (19) von einer Steuereinheit (5) des Gespanns (1) angesteuert wird, um das Anbaugerät (4) und/oder das zumindest eine Bearbeitungswerkzeug (10, 11, 18) mit Erreichen einer, insbesondere georeferenzierten, Bearbeitungsgrenze (7), welche einen zu bearbeitenden Feldbereich (8) von einem unbearbeitet zu lassenden Bereich (9) trennt, wechselweise zu deaktivieren und zu aktivieren, wobei zumindest eine der Steuereinheit (5) vorgegebene oder vorgebbare Verzugszeit (VZ) verwendet wird, mit welcher das Deaktivieren oder das Aktivieren des Anbaugerätes (4) und/oder des zumindest einen Bearbeitungswerkzeugs (10, 11, 18) zeitlich versetzt vor dem Erreichen der Bearbeitungsgrenze (7) angesteuert wird, **dadurch gekennzeichnet, dass** zur automatischen Anpassung der zumindest einen Verzugszeit (VZ) ein Sollwert für einen Aktivierungspunkt bzw. ein Sollwert für einen Deaktivierungspunkt, welche der Lage der Bearbeitungsgrenze (7) entsprechen, mit einem sensorisch bestimmten Istwert für den Aktivierungspunkt bzw. den Deaktivierungspunkt durch die Steuereinheit (5) verglichen wird, um einen Differenzabstand (Δs) zwischen dem Sollwert und dem Istwert des Aktivierungspunktes bzw. des Deaktivierungspunktes zu bestimmen, aus dem unter Berücksichtigung der Vorfahrtgeschwindigkeit (v) eine Korrekturzeit (Δt) als auf die zumindest eine Verzugszeit (VZ) anzuwendender Korrekturfaktor bestimmt wird.

2. Verfahren nach Anspruch 1, **dadurch gekennzeichnet, dass** zur räumlichen Bestimmung des Istwertes des Aktivierungspunktes sowie des Deaktivierungspunktes Positionssignale eines Positionsortungssensors (12) durch die Steuereinheit (5) ausgewertet werden.

3. Verfahren nach Anspruch 1 oder 2, **dadurch gekennzeichnet, dass** zur Bestimmung des Istwertes des Aktivierungspunktes sowie des Deaktivierungspunktes zumindest ein Betriebsparameter der anzusteuernden Geräteschnittstelle (3) und/oder der mindestens einen Werkzeugschnittstelle (19) durch die Steuereinheit (5) ausgewertet wird.

4. Verfahren nach Anspruch 3, **dadurch gekennzeichnet, dass** als ein Betriebsparameter der Geräteschnittstelle (3) und/oder der mindestens einen Werkzeugschnittstelle (19) ein Schwellwert für eine Soll-Arbeitsposition der Geräteschnittstelle (3) und/oder der mindestens einen Werkzeugschnittstelle (19) bestimmt wird.

5. Verfahren nach Anspruch 4, **dadurch gekennzeichnet, dass** der Schwellwert für die Soll-Arbeitsposition durch einen Bediener des Gespanns (1) manuell vorgegeben oder durch einen von der Steuereinheit (5) initiierten Lernprozess bestimmt wird.

6. Verfahren nach einem der vorangehenden Ansprüche, **dadurch gekennzeichnet, dass** zur Bestimmung des Istwertes des Aktivierungspunktes sowie des Istwertes des Deaktivierungspunktes zumindest ein Betriebsparameter des Anbaugerätes (4) durch die Steuereinheit (5) ausgewertet wird.

7. Verfahren nach Anspruch 6, **dadurch gekennzeichnet, dass** als ein Betriebsparameter des Anbaugerätes (4) ein Wert für die Arbeitstiefe des Anbaugerätes (4) durch eine am Anbaugerät (4) angeordnete Sensorik (13) erfasst und mit einem vorgegebenen Schwellwert für die Arbeitstiefe verglichen wird.

8. Verfahren nach Anspruch 6 oder 7, **dadurch gekennzeichnet, dass** als ein Betriebsparameter des Anbaugerätes (4) ein Wert für die Bearbeitungsbreite durch die Bearbeitungswerkzeuge durch eine am Anbaugerät (4) angeordnete Sensorik (13) erfasst und mit einem vorgegebenen Schwellwert für die Bearbeitungsbreite verglichen wird.

9. Verfahren nach einem der vorangehenden Ansprüche, **dadurch gekennzeichnet, dass** mit der Ansteuerung des wenigstens einen Aktuators der Geräteschnittstelle (3) und/oder der Werkzeugschnittstelle (19) sowie mit der Detektion des Istwertes des Aktivierungspunktes sowie des Istwertes des Aktivierungspunktes die Aufzeichnung der von dem Positionsortungssensor (12) bereitgestellten Positionssignale initiiert wird.

10. Verfahren nach einem der vorangehenden Ansprüche, **dadurch gekennzeichnet, dass** für das Aktivieren oder das Deaktivieren unterschiedliche Verzugszeiten (VZ) verwendet werden.

11. Verfahren nach einem der vorangehenden Ansprüche, **dadurch gekennzeichnet, dass** die Bestimmung der Korrekturzeit (Δt) zyklisch durchgeführt wird.

12. Verfahren nach Anspruch 10, **dadurch gekennzeichnet, dass** die Bestimmung der Korrekturzeit (Δt) nach jedem Aktivierungs- und Deaktivierungsvorgang durchgeführt wird.

13. Verfahren nach einem der vorangehenden Ansprüche, **dadurch gekennzeichnet, dass** die Vorgabe der Verzugszeit (VZ) in Abhängigkeit von der Art des Anbaugerätes (4) durchgeführt wird.

14. Verfahren nach einem der vorangehenden Ansprüche, **dadurch gekennzeichnet, dass** für die Vorgabe der Verzugszeit (VZ) eine Kalibrierfahrt durchgeführt wird.

15. Verfahren nach einem der vorangehenden Ansprüche, **dadurch gekennzeichnet, dass** die Korrekturzeit (Δt) als Mittelwert von Verzugszeiten (VZ) mehrerer Deaktivierungen und Aktivierungen des Anbaugerätes (4) und/oder des zumindest einen Bearbeitungswerkzeugs (10, 11, 18) bestimmt wird

16. Landwirtschaftliches Gespann (1), umfassend eine landwirtschaftliche Arbeitsmaschine (2) mit zumindest einer durch wenigstens einen Aktuator betätigten Geräteschnittstelle (3), an welche ein landwirtschaftliches Anbaugerät (4) mit zumindest einem Bearbeitungswerkzeug (10, 11, 18) zur Bearbeitung eines zu bearbeitenden Feldes (6) adaptiert ist, und/oder mindestens eine an der Arbeitsmaschine (2) und/oder dem Anbaugerät (4) angeordnete, durch wenigstens einen Aktuator betätigte Werkzeugschnittstelle (19), wobei das Gespann (1) eine Steuereinheit (5) aufweist, die zur Ansteuerung des wenigstens einen Aktuators der Geräteschnittstelle (3) und/oder des wenigstens einen Aktuators der Werkzeugschnittstelle (19) ausgeführt und eingerichtet ist, um das Anbaugerät (4) und/oder das zumindest eine Bearbeitungswerkzeug (10, 11, 18) mit Erreichen einer, insbesondere georeferenzierten, Bearbeitungsgrenze (7), welche einen zu bearbeitenden Feldbereich (8) von einem unbearbeitet zu lassenden Bereich (9) trennt, wechselweise zu deaktivieren und zu aktivieren, wobei die Steuereinheit (5) zumindest eine vorgegebene oder vorgebbare Verzugszeit (VZ) verwendet, mit welcher die Steuereinheit (5) das Deaktivieren oder das Aktivieren des Anbaugerätes (4) und/oder des zumindest einen Bearbeitungswerkzeugs (10, 11, 18) zeitlich versetzt vor dem Erreichen der Bearbeitungsgrenze (7) ansteuert, **dadurch gekennzeichnet, dass** die Steuereinheit (5) dazu ausgeführt und eingerichtet ist, zur automatischen Anpassung der zumindest einen Verzugszeit (VZ) einen Sollwert für einen Aktivierungspunkt bzw. einen Sollwert für einen Deaktivierungspunkt, welche der Lage der Bearbeitungsgrenze (7) entsprechen, mit einem sensorisch bestimmten Istwert für den Aktivierungspunkt bzw. den Deaktivierungspunkt zu vergleichen, um einen Differenzabstand (Δs) zwischen dem Sollwert und dem Istwert des Aktivierungspunktes bzw. des Deaktivierungspunktes zu bestimmen, und aus dem Differenzabstand (Δs) unter Berücksichtigung der Vorfahrtgeschwindigkeit (v) eine Korrekturzeit (Δt) als auf die Verzugszeit (VZ) anzuwendender Korrekturfaktor zu bestimmen.

17. Landwirtschaftliches Gespann nach Anspruch 16, **dadurch gekennzeichnet, dass** das Gespann (1) zur Durchführung des Verfahrens nach einem der Ansprüche 1 bis 15 ausgeführt und eingerichtet ist.
